# EUROPEAN PATENT SPECIFICATION

(11) **EP 2 618 497 B1**
(45) Date of publication and mention of the grant of the patent: **05.04.2017**
(21) Application number: 12151981.3
(22) Date of filing: 20.01.2012
(51) Int. Cl.: H04B 5/02, H04B 7/06

(54) **Mobile wireless communications device including nfc antenna scanning switch and related methods**
Mobile drahtlose Kommunikationsvorrichtung mit NFC-Antennenabtastschalter und zugehörige Verfahren
Dispositif de communication mobile sans fil incluant un commutateur à balayage d'antenne NFC et procédés associés

(43) Date of publication of application: 24.07.2013
(73) Proprietor: BlackBerry Limited, Waterloo, ON N2K 0A7 (CA)
(72) Inventor: Lewin, Mathias, SE-211 40 Malmo (SE)
(74) Representative: Noble, Nicholas

(56) References cited:
- EP-A2- 0 744 841
- US-A1- 2005 143 151
- US-A1- 2010 087 146

## Description

### Technical Field

The present disclosure generally relates to the field of wireless communications systems, and, more particularly, to mobile wireless communications devices and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multifunction devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters

United States Patent Publication No. 2010/0087146 to Han et al. is directed to a method and device for performing short range wireless communication of a mobile terminal purports to reduce a time period of searching for terminals for connection. A short wireless communication distance can be extended by switching to/from a directional antenna and an omni-directional antenna of the mobile terminal according to a user setting. The method of performing short range wireless communication in a mobile terminal including a directional first antenna, an omni-directional second antenna, and a switch unit for switching the first antenna and the second antenna includes: activating the first antenna and searching for connectable terminals, when a short range wireless communication function is activated; and forming a communication channel with the found terminal, if a connectable terminal is found after activating the first antenna.

The invention is defined in the independent claims. Some optional features of the invention are defined in the dependent claims.

### Brief Description of the Drawings

FIG. 1 is a schematic block diagram of a communications system in accordance with an example embodiment.
FIG. 2 is a schematic diagram of the communications system of FIG. 1 showing the display of the mobile device.
FIG. 3 is a flow diagram illustrating example method aspects associated with the system and devices of FIGS. 1-2.
FIG. 4 is a schematic block diagram illustrating example mobile wireless communications device components that may be used with the devices of FIGS. 1 and 2.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device is disclosed herein which may include a wireless transceiver, a processor coupled to the wireless transceiver, and a near-field communication (NFC) device coupled to the processor. The NFC device may include an NFC controller, an NFC transceiver coupled to the NFC controller, and a plurality of spaced apart NFC antennas. The NFC device also includes a scanning switch coupled between the plurality of spaced apart NFC antennas and the NFC transceiver. The NFC controller may be configured to operate the scanning switch to successively couple each NFC antenna of the plurality thereof to the NFC transceiver while attempting to establish NFC communication with an adjacent NFC device. The NFC device may also be configured to lock coupling to a corresponding NFC antenna upon establishing NFC communication with the adjacent NFC device.

The NFC controller may be configured to operate the scanning switch to successively couple each NFC antenna of the plurality thereof to the NFC transceiver in a random fashion, for example. The NFC controller may be configured to operate the scanning switch to successively couple each NFC antenna of the plurality thereof to the NFC transceiver in a predetermined pattern, for example.

The NFC controller may be configured to operate the scanning switch to unlock coupling to the corresponding NFC antenna upon losing NFC communication with the adjacent NFC device. The NFC controller may be configured to resume operating the scanning switch to successively couple each NFC antenna of the plurality thereof to the NFC transceiver while attempting to establish NFC communication with an adjacent NFC device after coupling has been unlocked, for example.

The NFC controller may be configured to determine a relative position of the adjacent NFC device based upon the corresponding NFC antenna with locked coupling. The mobile wireless communications device may further include a display coupled to the processor. The processor may be configured to generate an image on the display based upon the relative position of the adjacent NFC device, for example.

The mobile wireless communications device may further include a portable housing carrying the wireless transceiver, the processor, and the NFC device, for example. The plurality of spaced apart NFC antennas may be spaced around a periphery of the portable housing. The wireless transceiver may include a cellular transceiver, for example.

A related method aspect is directed to a communications method for a mobile wireless communications device that may include a wireless transceiver, a processor coupled to the wireless transceiver, and a near-field communication (NFC) device coupled with the processor. The NFC device may include an NFC controller, an NFC transceiver coupled with the NFC controller, a plurality of spaced apart NFC antennas, and a scanning switch coupled between the plurality of spaced apart NFC antennas and the NFC transceiver. The method may include using the NFC controller to operate the scanning switch to successively couple each NFC antenna of the plurality thereof to the NFC transceiver while attempting to establish NFC communication with an adjacent NFC device. The method may further include using the NFC controller to operate the scanning switch to lock coupling to a corresponding NFC antenna upon establishing NFC communication with the adjacent NFC device.

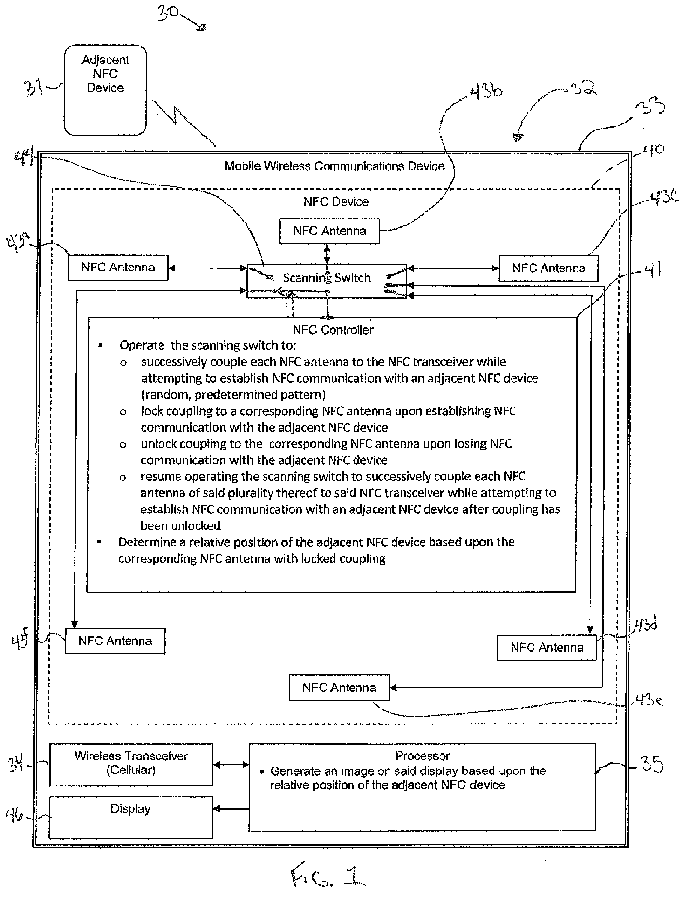

Referring initially to FIGS. 1-2, a communications system **30** illustratively includes a mobile wireless communications device **32** (also referred to as a "mobile device" herein). Example mobile wireless communications devices may include portable or personal media players (e.g., music or MP3 players, video players, etc.), portable gaming devices, portable or mobile telephones, smartphones, tablet computers, digital cameras, etc.

The mobile device **32** illustratively includes a portable housing **33** and a wireless transceiver **34** carried by the portable housing **33**. The wireless transceiver **34** may comprise a cellular transceiver or other type of wireless communications transceiver, and may communicate any combination of voice and data, such as, for example, email.

The mobile device **32** includes a display **46** carried by the portable housing **33**. The display **46** may comprise a liquid crystal display (LCD) and may be configured to display information relating to data or voice communications. The display **46** may be in the form of an active display that includes a backlight, for example. The display **46** may display email information, contact information, or call information. The display **46** may be another type of display, for example, a passive display, and may display other information.

The mobile device **32** also includes a processor **35** that is carried by the portable housing **33** and coupled with the wireless transceiver **34** and the display **46**. The processor **35** may be implemented using hardware (e.g., memory, etc.) and software components, i.e., computer-readable instructions for causing the mobile device **32** to perform the various functions or operations described herein.

The mobile device **32** also includes a NFC device **40** carried by the portable housing **33** and coupled with the processor **35**. The NFC device **40** includes a NFC controller **41** and a NFC transceiver **42** coupled with the NFC controller **41**.

The NFC device **40** also includes spaced apart NFC antennas **43a-43f** spaced around a periphery of the portable housing **31**. Illustratively, there are six spaced apart NFC antennas **43a-43f** spaced around the portable housing **33:** two on each side of the portable housing, one adjacent the top of the portable housing, and one adjacent the bottom of the portable housing. Of course, there may be a different number of spaced apart NFC antennas **43** which may be spaced apart or carried by the portable housing **33** in a different configuration.

The NFC controller **41**, the NFC transceiver **42**, and the spaced apart NFC antennas **43a-43f** advantageously cooperate to perform at least one NFC communication function. For example, the NFC device **40** may communicate with an adjacent NFC device **31** or terminal that is part of the communications system **30** based upon proximity thereto using NFC communication. The adjacent NFC device **31** may be a NFC tag, a NFC-enabled mobile device, a smart poster etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The NFC device **40** also includes a scanning switch **44** coupled between the NFC antennas **43a-43f** and the NFC transceiver **42**. The NFC controller **41** is configured to operate with the scanning switch **44** to successively couple each of the NFC antennas **43a-43f** to the NFC transceiver **42** (e.g. **43a, 43b, 43c,** etc.) while attempting to establish NFC communication with the adjacent NFC device **31**. The NFC controller **41** is also configured to operate the scanning switch **44** to lock coupling to a corresponding NFC antenna **43a-43f** upon established NFC communication with the adjacent NFC device **31**. In the illustrated embodiment in FIG. 1, the scanning switch would likely be locked with NFC antenna **43a** or **43b** depending on the scanning pattern.

In other words, the NFC controller **41** operates the scanning switch **44** as a multiplexer to switch from one NFC antenna **43a-43f** to another, attempt to communicate with the adjacent NFC device **31** using each coupled NFC antenna, and if no communication can be established with the adjacent NFC device, then switching to the next NFC antenna to attempt to establish NFC communication. The switching continues until communication is established with the adjacent NFC device **31**.

The NFC controller **41** may be configured to operate the scanning switch **44** to successively couple each NFC antenna **43a-43f** to the NFC transceiver **42** in a random manner. The NFC controller **41** may be configured to operate the scanning switch **44** to successively couple each NFC antenna **43a-43f** to the NFC transceiver **42** in a predetermined pattern. For example, the NFC controller **41** may be configured to operate the scanning switch **44** to successively couple each NFC antenna **43a-43f** to the NFC transceiver **42** in a zig-zag pattern (e.g. **43a, 43d, 43f, 43c, 43e, 43b**), by location in the portable housing **33** (e.g. **43a, 43f, 43c, 43d, 43b, 43e**).

In some embodiments, after communication has been established with the adjacent NFC device **31**, the NFC controller **41** may operate the scanning switch to successively couple each of the NFC antennas **43a-43f** that are not-locked to the NFC transceiver **42** while attempting to establish NFC communication with another adjacent NFC device. In other words, more than one NFC antenna **43a-43f** may be locked upon establishing communication with respective adjacent NFC devices.

The NFC controller **41** is also configured to operate the scanning switch **44** to unlock coupling to the corresponding NFC antenna **43a-43f** upon losing NFC communication with the adjacent NFC device **31**. This may occur, for example, if adjacent NFC device 31 is outside the effective range of the NFC transceiver **42**. The NFC controller **41** is also configured to resume operating the scanning switch **44** to successively couple each NFC antenna **43a-43f** to the NFC transceiver **42** while again attempting to establish NFC communication with the adjacent NFC device after coupling has been unlocked.

As will be appreciated by those skilled in the art, when using NFC with multiple devices, a single NFC antenna may be a "blocker" to achieve desired performance in cases of common use. For example, an NFC device near a center of a mobile wireless communications device may make it increasingly difficult to interact with adjacent NFC device when the mobile wireless communications device is placed on a table. Coupling multiple NFC antennas, for example, in series, to an NFC transceiver results in increased attenuation, and thus, undesired operation. Including multiple NFC antennas with respective NFC transceivers may address the above-noted problem; however, multiple NFC transceivers increase production costs, draw an increased amount of power, and occupy an increased amount of space in the portable housing. Advantageously, the NFC controller **41** being configured to operate the scanning switch **44**, as described herein, has a reduced impact on efficiency with respect to other approaches, as it may consume roughly the same amount of power as compared to a single NFC antenna. Sensitivity of each NFC antenna **43a-43f** may also be maintained.

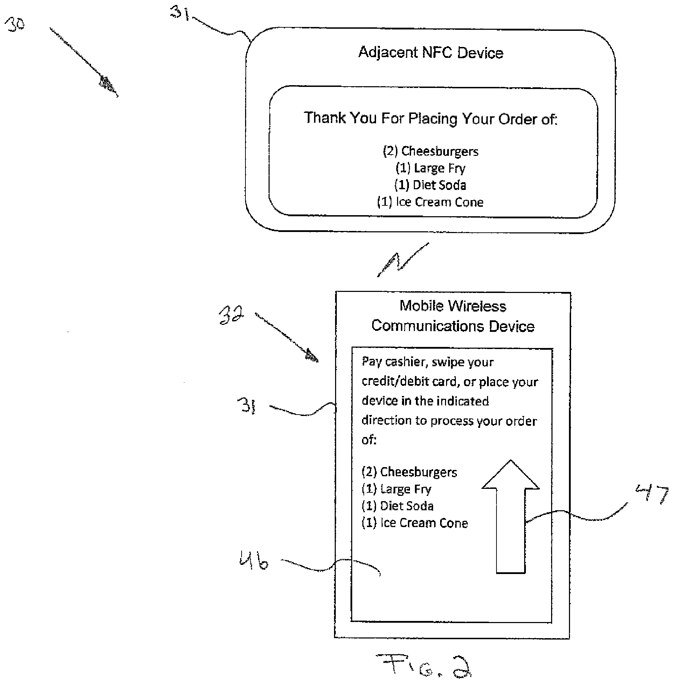

The NFC controller **41** may be configured to determine a relative position of the adjacent NFC device **31** based upon the corresponding NFC antenna **43a-43f** with locked coupling. In particular, the processor 35 may be configured to generate an image **47**, (e.g. an arrow) on the display **46** based upon the relative position of the adjacent NFC device **31** (FIG. 2). This may be particularly advantageous for use with a directionally based application, for example, where a user interface is updated based upon the relative location of the adjacent NFC device **31**. Additionally, determining the relative location of the adjacent NFC device **31** may also be particularly advantageous for spanning a user interface across multiple displays, for example.

As will be appreciated by those skilled in the art, one exemplary application of the embodiments described herein may be in a fast food setting with a fast food ordering application. A user may order items on tablet, for example, and pay with an NFC equipped smart phone through a front NFC antenna. The rear NFC antenna may be used for relaying information or functions for the fast food restaurant employees, for example, locking, unlocking, and/or cancelling an order.

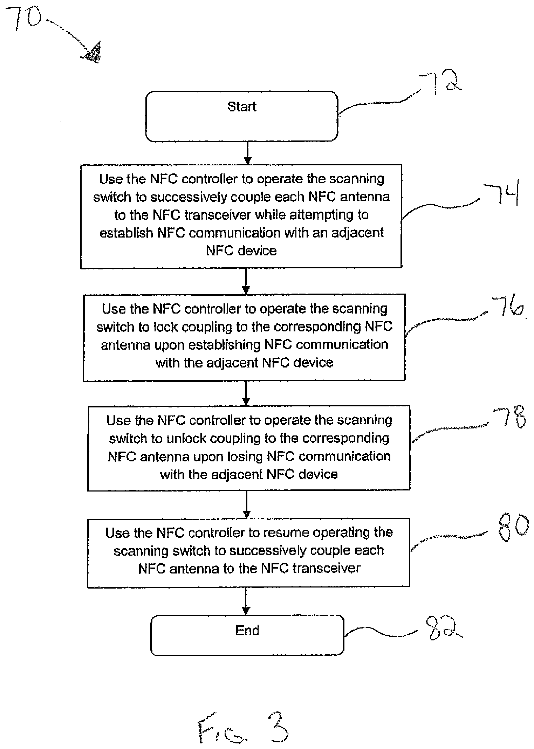

Referring now to the flowchart **70** in FIG. 3, beginning at Block **72**, a related method aspect is directed to a communications method for a mobile wireless communications device **30** that may include a wireless transceiver **34**, a processor **35** coupled to the wireless transceiver, and a near-field communication (NFC) device **40** coupled with the processor. The NFC device **40** may include an NFC controller **41**, an NFC transceiver **42** coupled with the NFC controller, a plurality of spaced apart NFC antennas **43a-43f,** and a scanning switch **44** coupled between the plurality of spaced apart NFC antennas and the NFC transceiver. At Block **74**, the method includes using the NFC controller **41** to operate the scanning switch **44** to successively couple each NFC antenna **43a-43f** to the NFC transceiver **44** while attempting to establish NFC communication with an adjacent NFC device **31**. The method further includes, at Block **76** using the NFC controller **41** to operate the scanning switch **44** to lock coupling to a corresponding NFC antenna **43a-43f** upon establishing NFC communication with the adjacent NFC device **31**.

At Block **78**, the further includes using the NFC controller **41** to operate the scanning switch **44** to unlock coupling to the corresponding NFC antenna **43a-43f** upon losing NFC communication with the adjacent NFC device **31**. The method further includes, at Block **80**, using the NFC controller **41** to resume operating the scanning switch to successively couple each NFC antenna **43a-43f** to the NFC transceiver **41** while attempting to establish NFC communication with an adjacent NFC device **31** after coupling has been unlocked. The method ends at Block **82**.

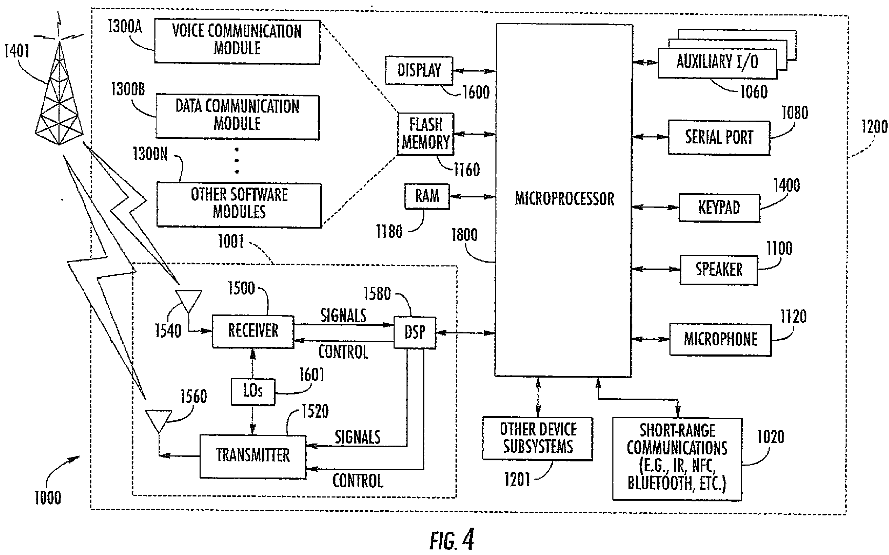

Example components of a mobile wireless communications device **1000** that may be used in accordance with the above-described embodiments are further described below with reference to FIG. 4. The device **1000** illustratively includes a housing **1200**, a keyboard or keypad **1400** and an output device **1600**. The output device shown is a display **1600**, which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600**, as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 4. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180.**

The processing device **1800**, in addition to its operating system functions, enables execution of software applications **1300A-1300N** on the device **1000**. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device may also be used to compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (32) comprising:
a wireless transceiver (34);
a processor (35) coupled to said wireless transceiver; and
a near-field communication (NFC) device (40) coupled to said processor and comprising
an NFC controller (41),
an NFC transceiver (42) coupled to said NFC controller, and
a plurality of spaced apart NFC antennas (43a-43f), and
a scanning switch (44) coupled between said plurality of spaced apart NFC antennas and said NFC transceiver,
said NFC controller configured to operate said scanning switch to
successively couple each NFC antenna of said plurality thereof to said NFC transceiver while attempting to establish NFC communication with an adjacent NFC device,
lock coupling to a corresponding NFC antenna upon establishing NFC communication with the adjacent NFC device, and
unlock coupling to the corresponding NFC antenna upon losing NFC communication with the adjacent NFC device.

2. The mobile wireless communications device of Claim 1, wherein said NFC controller is configured to operate the scanning switch to successively couple each NFC antenna of said plurality thereof to said NFC transceiver in a random fashion.

3. The mobile wireless communications device of Claim 1, wherein said NFC controller is configured to operate the scanning switch to successively couple each NFC antenna of said plurality thereof to said NFC transceiver in a predetermined pattern.

4. The mobile wireless communications device of Claim 1, wherein said NFC controller is configured to resume operating the scanning switch to successively couple each NFC antenna of said plurality thereof to said NFC transceiver while attempting to establish NFC communication with an adjacent NFC device after coupling has been unlocked.

5. The mobile wireless communications device of Claim 1, wherein said NFC controller is configured to determine a relative position of the adjacent NFC device based upon the corresponding NFC antenna with locked coupling.

6. The mobile wireless communications device of Claim 5, further comprising a display (46) coupled to said processor; and wherein said processor is configured to generate an image (47) on said display based upon the relative position of the adjacent NFC device.

7. The mobile wireless communications device of Claim 1, further comprising a portable housing (33) carrying said wireless transceiver, said processor, and said NFC device; and wherein said plurality of spaced apart NFC antennas is spaced around a periphery of said portable housing.

8. The mobile wireless communications device of Claim 1, wherein said wireless transceiver comprises a cellular transceiver.

9. A communications method for a mobile wireless communications device (32) comprising a wireless transceiver (34), a processor (35) coupled to the wireless transceiver, and a near-field communication (NFC) device (40) coupled with the processor and comprising an NFC controller (41), an NFC transceiver (42) coupled with the NFC controller, a plurality of spaced apart NFC antennas (43a-43f), and a scanning switch (44) coupled between the plurality of spaced apart NFC antennas and the NFC transceiver, the method comprising:
using the NFC controller to operate the scanning switch to successively couple each NFC antenna of the plurality thereof to the NFC transceiver while attempting to establish NFC communication with an adjacent NFC device;
using the NFC controller to operate the scanning switch to lock coupling to a corresponding NFC antenna upon establishing NFC communication with the adjacent NFC device; and
using the NFC controller to operate the scanning switch to unlock coupling to the corresponding NFC antenna upon losing NFC communication with the adjacent NFC device.

10. The method of Claim 9, further comprising using the NFC controller to operate the scanning switch to successively couple each NFC antenna of the plurality thereof to the NFC transceiver in a random fashion.

11. The method of Claim 9, further comprising using the NFC controller to operate the scanning switch to successively couple each NFC antenna of the plurality thereof to the NFC transceiver in a predetermined pattern.

12. The method of Claim 9, further comprising using the NFC controller to resume operating the scanning switch to successively couple each NFC antenna of the plurality thereof to the NFC transceiver while attempting to establish NFC communication with an adjacent NFC device after coupling has been unlocked.

13. The method of Claim 9, further comprising using the NFC controller to determine a relative position of the adjacent NFC device based upon the corresponding NFC antenna with locked coupling.

14. The method of Claim 13, wherein the mobile wireless communications device further comprises a display (46) coupled to said processor; the method further comprising generating an image (47) on said display based upon the relative position of the adjacent NFC device.

## Patentansprüche

1. Mobile drahtlose Kommunikationsvorrichtung (32), die umfasst:
einen drahtlosen Sendeempfänger (34);
einen Prozessor (35), der mit dem drahtlosen Sendeempfänger verbunden ist; und
eine Nahfeldkommunikations-(NFC-)Vorrichtung (40), die mit dem Prozessor verbunden ist und umfasst:
eine NFC-Steuereinheit (41),
einen NFC-Sendeempfänger (42), der mit der NFC-Steuereinheit verbunden ist, und
eine Mehrzahl von beabstandeten NFC-Antennen (43a-43f), und
einen Abtastschalter (44), der zwischen der Mehrzahl von beabstandeten NFC-Antennen und dem NFC-Sendeempfänger verbunden ist,
wobei die NFC-Steuereinheit so konfiguriert ist, dass sie den Abtastschalter betreibt zum:
erfolgreichen Verbinden jeder NFC-Antenne der Mehrzahl davon mit dem NFC-Sendeempfänger während eines versuchten Aufbaus einer NFC-Kommunikation mit einer benachbarten NFC-Vorrichtung,
Sichern der Verbindung mit einer entsprechenden NFC-Antenne nach Aufbau einer NFC-Kommunikation mit der benachbarten NFC-Vorrichtung, und
Trennen der Verbindung mit der entsprechenden NFC-Antenne nach Verlust einer NFC-Kommunikation mit der benachbarten NFC-Vorrichtung.

2. Mobile drahtlose Kommunikationsvorrichtung nach Anspruch 1, wobei die NFC-Steuereinheit so konfiguriert ist, dass sie den Abtastschalter zum erfolgreichen Verbinden jeder NFC-Antenne der Mehrzahl davon mit dem NFC-Sendeempfänger auf willkürliche Weise betreibt.

3. Mobile drahtlose Kommunikationsvorrichtung nach Anspruch 1, wobei die NFC-Steuereinheit so konfiguriert ist, dass sie den Abtastschalter zum erfolgreichen Verbinden jeder NFC-Antenne der Mehrzahl davon mit dem NFC-Sendeempfänger in einem vordefinierten Muster betreibt.

4. Mobile drahtlose Kommunikationsvorrichtung nach Anspruch 1, wobei die NFC-Steuereinheit so konfiguriert ist, dass sie das Betreiben des Abtastschalters zum erfolgreichen Verbinden jeder NFC-Antenne der Mehrzahl davon mit dem NFC-Sendeempfänger bei einem versuchten Aufbau einer NFC-Kommunikation mit einer benachbarten NFC-Vorrichtung nach Trennen der Verbindung wiederaufnimmt.

5. Mobile drahtlose Kommunikationsvorrichtung nach Anspruch 1, wobei die NFC-Steuereinheit so konfiguriert ist, dass sie eine relative Position der benachbarten NFC-Vorrichtung auf Basis der entsprechenden NFC-Antenne mit gesicherter Verbindung ermittelt.

6. Mobile drahtlose Kommunikationsvorrichtung nach Anspruch 5, die des Weiteren eine Anzeige (46) umfasst, die mit dem Prozessor verbunden ist; und wobei der Prozessor so konfiguriert ist, dass er ein Bild (47) auf Basis der relativen Position der benachbarten NFC-Vorrichtung auf der Anzeige erzeugt.

7. Mobile drahtlose Kommunikationsvorrichtung nach Anspruch 1, die des Weiteren ein tragbares Gehäuse (33) umfasst, in dem der drahtlose Sendeempfänger, der Prozessor und die NFC-Vorrichtung aufgenommen sind; und wobei die Mehrzahl von beabstandeten NFC-Antennen um einen Umfang des tragbaren Gehäuses beabstandet ist.

8. Mobile drahtlose Kommunikationsvorrichtung nach Anspruch 1, wobei der drahtlose Sendeempfänger einen Mobilfunk-Sendeempfänger umfasst.

9. Kommunikationsverfahren für eine mobile drahtlose Kommunikationsvorrichtung (32), die einen drahtlosen Sendeempfänger (34), einen Prozessor (35), der mit dem drahtlosen Sendeempfänger verbunden ist, und eine Nahfeldkommunikation-(NFC-)Vorrichtung (40) umfasst, die mit dem Prozessor verbunden ist und eine NFC-Steuereinheit (41), einen NFC-Sendeempfänger (42), der mit der NFC-Steuereinheit verbunden ist, eine Mehrzahl von beabstandeten NFC-Antennen (43a-43f) und einen Abtastschalter (44) umfasst, der zwischen der Mehrzahl von beabstandeten NFC-Antennen und dem NFC-Sendeempfänger verbunden ist, wobei das Verfahren umfasst:
Verwenden der NFC-Steuereinheit, so dass sie den Abtastschalter zum erfolgreichen Verbinden jeder NFC-Antenne der Mehrzahl davon mit dem NFC-Sendeempfänger während eines versuchten Aufbaus einer NFC-Kommunikation mit einer benachbarten NFC-Vorrichtung betreibt;
Verwenden der NFC-Steuereinheit, so dass sie den Abtastschalter zum Sichern der Verbindung mit einer entsprechenden NFC-Antenne nach Aufbau einer NFC-Kommunikation mit der benachbarten NFC-Vorrichtung betreibt; und
Verwenden der NFC-Steuereinheit, so dass sie den Abtastschalter zum Trennen der Verbindung mit der entsprechenden NFC-Antenne nach Verlust einer NFC-Kommunikation mit der benachbarten NFC-Vorrichtung betreibt.

10. Verfahren nach Anspruch 9, das des Weiteren das Verwenden der NFC-Steuereinheit, so dass sie den Abtastschalter zum erfolgreichen Verbinden jeder NFC-Antenne der Mehrzahl davon mit dem NFC-Sendeempfänger auf willkürliche Weise betreibt, umfasst.

11. Verfahren nach Anspruch 9, das des Weiteren das Verwenden der NFC-Steuereinheit, so dass sie den Abtastschalter zum erfolgreichen Verbinden jeder NFC-Antenne der Mehrzahl davon mit dem NFC-Sendeempfänger in einem vordefinierten Muster betreibt, umfasst.

12. Verfahren nach Anspruch 9, das des Weiteren das Verwenden der NFC-Steuereinheit, so dass sie das Betreiben des Abtastschalters zum erfolgreichen Verbinden jeder NFC-Antenne der Mehrzahl davon mit dem NFC-Sendeempfänger bei einem versuchten Aufbau einer NFC-Kommunikation mit einer benachbarten NFC-Vorrichtung nach Trennen der Verbindung wiederaufnimmt, umfasst.

13. Verfahren nach Anspruch 9, das des Weiteren das Verwenden der NFC-Steuereinheit, so dass sie eine relative Position der benachbarten NFC-Vorrichtung auf Basis der entsprechenden NFC-Antenne mit gesicherter Verbindung ermittelt, umfasst.

14. Verfahren nach Anspruch 13, wobei die mobile drahtlose Kommunikationsvorrichtung des Weiteren eine Anzeige (46) umfasst, die mit dem Prozessor verbunden ist; wobei das Verfahren des Weiteren das Erzeugen eines Bildes (47) auf der Anzeige auf Basis der relativen Position der benachbarten NFC-Vorrichtung umfasst.

## Revendications

1. Dispositif de communication mobile sans fil (32), comprenant :
un émetteur-récepteur sans fil (34) ;
un processeur (35) couplé audit émetteur-récepteur sans fil ; et
un dispositif de communication en champ proche, NFC pour « *Near Field Communication* », (40) couplé audit processeur et comprenant :
un contrôleur NFC (41) ;
un émetteur-récepteur NFC (42) couplé audit contrôleur NFC ; et
une pluralité d'antennes NFC écartées les unes des autres (43a à 43f) ; et
un commutateur de balayage (44) couplé entre ladite pluralité d'antennes NFC écartées les unes des autres et ledit émetteur-récepteur NFC ;
ledit contrôleur NFC étant configuré pour faire fonctionner ledit commutateur de balayage afin de
coupler successivement chaque antenne NFC parmi ladite pluralité avec ledit émetteur-récepteur NFC tout en essayant d'établir une communication NFC avec un dispositif NFC voisin ;
verrouiller le couplage avec une antenne NFC correspondante après établissement de la communication NFC avec le dispositif NFC voisin ; et
déverrouiller le couplage avec l'antenne NFC correspondante après perte de la communication NFC avec le dispositif NFC voisin.

2. Dispositif de communication mobile sans fil selon la revendication 1, dans lequel ledit contrôleur NFC est configuré pour faire fonctionner le commutateur de balayage de manière à coupler successivement chacune des antennes NFC parmi ladite pluralité avec ledit émetteur-récepteur NFC de manière aléatoire.

3. Dispositif de communication mobile sans fil selon la revendication 1, dans lequel ledit contrôleur NFC est configuré pour faire fonctionner le commutateur de balayage de manière à coupler successivement chacune des antennes NFC parmi ladite pluralité avec ledit émetteur-récepteur NFC selon un modèle prédéterminé.

4. Dispositif de communication mobile sans fil selon la revendication 1, dans lequel ledit contrôleur NFC est configuré pour reprendre le fonctionnement du commutateur de balayage de manière à coupler successivement chacune des antennes NFC parmi ladite pluralité avec ledit émetteur-récepteur NFC tout en tentant d'établir la communication NFC avec un dispositif NFC voisin après que le couplage a été déverrouillé.

5. Dispositif de communication mobile sans fil selon la revendication 1, dans lequel ledit contrôleur NFC est configuré pour déterminer une position relative du dispositif NFC voisin en fonction de l'antenne NFC correspondante dont le couplage est verrouillé.

6. Dispositif de communication mobile sans fil selon la revendication 5, comprenant en outre un écran d'affichage (46) couplé audit processeur et dans lequel ledit processeur est configuré pour produire une image (47) sur ledit écran d'affichage en fonction de la positon relative du dispositif NFC voisin.

7. Dispositif de communication mobile sans fil selon la revendication 1, comprenant en outre un boîtier portatif (33) portant ledit émetteur-récepteur sans fil, ledit processeur et ledit dispositif NFC et dans lequel ladite pluralité d'antennes NFC écartées les unes des autres est répartie sur une périphérie dudit boîtier portatif.

8. Dispositif de communication mobile sans fil selon la revendication 1, dans lequel ledit émetteur-récepteur sans fil consiste en un émetteur-récepteur cellulaire.

9. Procédé de communication pour un dispositif de communication mobile sans fil (32) comprenant un émetteur-récepteur sans fil (34), un processeur (35) couplé à l'émetteur-récepteur sans fil et un dispositif de communication en champ proche, NFC pour « *Near Field Communication* », (40) couplé audit processeur et comprenant un contrôleur NFC (41), un émetteur-récepteur NFC (42) couplé au contrôleur NFC, une pluralité d'antennes NFC écartées les unes des autres (43a à 43f) et un commutateur de balayage (44) couplé entre ladite pluralité d'antennes NFC écartées les unes des autres et ledit émetteur-récepteur NFC, le procédé comprenant les étapes consistant à :
utiliser le contrôleur NFC pour faire fonctionner le commutateur de balayage afin de coupler successivement chaque antenne NFC parmi ladite pluralité avec ledit émetteur-récepteur NFC tout en essayant d'établir une communication NFC avec un dispositif NFC voisin ;
utiliser le contrôleur NFC pour faire fonctionner le commutateur de balayage afin de verrouiller le couplage avec une antenne NFC correspondante après établissement de la communication NFC avec le dispositif NFC voisin ; et
utiliser le contrôleur NFC pour faire fonctionner le commutateur de balayage afin de déverrouiller le couplage avec l'antenne NFC correspondante après perte de la communication NFC avec le dispositif NFC voisin.

10. Procédé selon la revendication 9, comprenant en outre l'étape consistant à utiliser le contrôleur NFC de manière à faire fonctionner le commutateur de balayage afin de coupler successivement chacune des antennes NFC parmi ladite pluralité avec ledit émetteur-récepteur NFC de manière aléatoire.

11. Procédé selon la revendication 9, comprenant en outre l'étape consistant à utiliser le contrôleur NFC de manière à faire fonctionner le commutateur de balayage afin de coupler successivement chacune des antennes NFC parmi ladite pluralité avec ledit émetteur-récepteur NFC selon un modèle prédéterminé.

12. Procédé selon la revendication 9, comprenant en outre l'étape consistant à utiliser le contrôleur NFC de manière à reprendre le fonctionnement du commutateur de balayage afin de coupler successivement chacune des antennes NFC parmi ladite pluralité avec ledit émetteur-récepteur NFC tout en tentant d'établir la communication NFC avec un dispositif NFC voisin après que le couplage a été déverrouillé.

13. Procédé selon la revendication 9, comprenant en outre l'étape consistant à utiliser le contrôleur NFC de manière à déterminer une position relative du dispositif NFC voisin en fonction de l'antenne NFC correspondante dont le couplage est verrouillé.

14. Procédé selon la revendication 13, dans lequel le dispositif de communication mobile sans fil comprend en outre un écran d'affichage (46) couplé audit processeur, le procédé comprenant en outre l'étape consistant à produire une image (47) sur ledit écran d'affichage en fonction de la positon relative du dispositif NFC voisin.
